# EUROPÄISCHE PATENTSCHRIFT

(11) **EP 1 250 540 B1**
(45) Veröffentlichungstag und Bekanntmachung des Hinweises auf die Patenterteilung: **18.07.2007**
(21) Anmeldenummer: 01907431.9
(22) Anmeldetag: 10.01.2001
(51) Int. Cl.: F16F 9/53, F16F 9/32

(54) **PASSIVES KRAFTELEMENT AUF BASIS ELEKTRORHEOLOGISCHER FLÜSSIGKEITEN**
PASSIVE FORCE ELEMENT ON THE BASIS OF ELECTRORHEOLOGIC LIQUIDS
ELEMENT DE FORCE PASSIF A BASE DE LIQUIDES ELECTRORHEOLOGIQUES

(30) Priorität: 15.01.2000 DE 10001420
(43) Veröffentlichungstag der Anmeldung: 23.10.2002
(73) Patentinhaber: Fludicon GmbH, 64293 Darmstadt (DE); Bayerische Motoren Werke Aktiengesellschaft, 80788 München (DE)
(72) Erfinder: ROSENFELDT, Horst, 64846 Groß-Zimmern (DE); WENDT, Eckhard, 73257 Köngen (DE); FAULSTROH, Hans-Joachim, 86511 Schmiechen (DE); SCHRÖTER, Frank, 85368 Moosburg (DE); SCHERK, Horst, 64372 Ober-Ramstadt (DE); ADAMS, Dorothea, 64572 Büttelborn (DE)
(74) Vertreter: Behrens, Helmut
(86) Internationale Anmeldenummer: PCT/EP2001/000230
(87) Internationale Veröffentlichungsnummer: WO 2001/051826

(56) Entgegenhaltungen:
- DE-A- 4 002 448
- DE-A- 19 820 570
- FR-A- 1 419 551
- GB-A- 1 278 764
- GB-A- 1 381 785
- GB-A- 1 599 565
- US-A- 5 588 509
- CHOI S B ET AL: "Control characteristics of a continuously variable ER damper" MECHATRONICS,GB,PERGAMON PRESS, OXFORD, Bd. 8, Nr. 2, 1. März 1998 (1998-03-01), Seiten 143-161, XP004122160 ISSN: 0957-4158

## Beschreibung

Passive Kraftelemente werden nicht nur bei Kraftfahrzeugen eingesetzt. Da jedes sich bewegende Objekt kinetische Energie bei einer Richtungsänderung oder einem Stop erzeugt, muß diese möglichst kontrolliert aufgenommen werden. Bekannte einfache Elemente zur Aufnahme der kinetischen Energie sind Federn bzw. Gummielemente, jedoch muß die gespeicherte Energie woanders abgebaut werden.

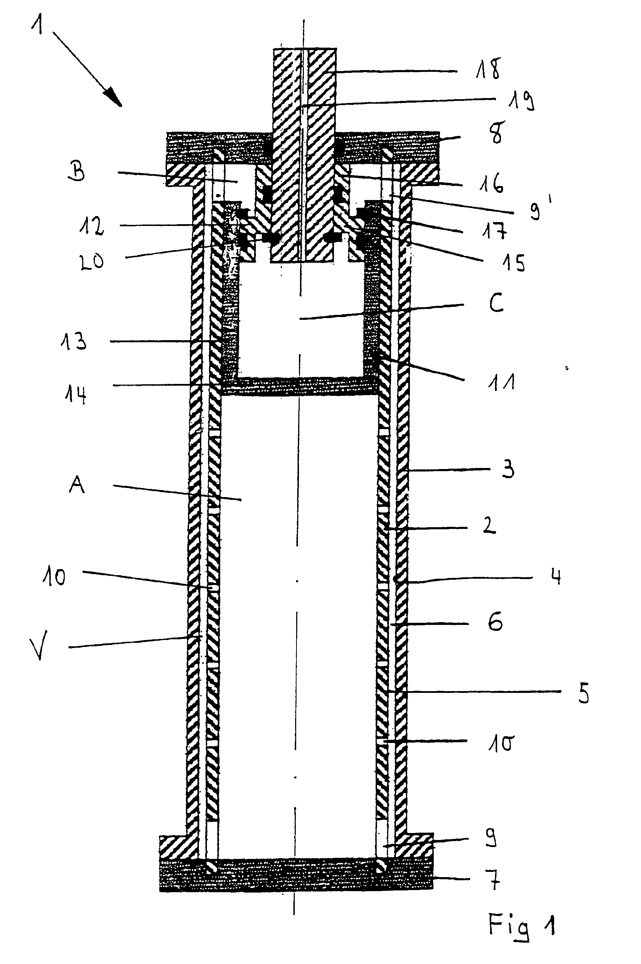

Aus dem Artikel "Selection of commercial electrorheological devices", Proceedings of the fourth international conference on electrorheological fluids, 1994, Seiten 643 bis 656, D. A. Brooks, ist schematisch in Abbildung 2 ein passives Kraftelement auf Basis elektrorheologischer Flüssigkeiten dargestellt. Bei diesem bekannten Kraftelement wird die kinetische Energie eines bewegten Objektes über die Kolbenstange mit Kolben auf die elektrorheologische Flüssigkeit übertragen. Das Dämpfungsverhalten bzw. der Energieabbau des Kraftelementes wird durch eine verstellbare Drosselöffnung, durch die die elektrorheologische Flüssigkeit bei einem Stoß strömt, geregelt. Die Verstellung der Drosselöffnung erfolgt durch Anlegen einer veränderlichen Spannung an die Elektroden eines im Squeezemode arbeitenden Ventils auf Basis elektrorheologischer Flüssigkeiten.

Elektrorheologische Flüssigkeiten sind Flüssigkeiten, bei denen die rheologischen Eigenschaften über das elektrische Feld steuerbar sind. In der Regel handelt es sich bei elektrorheologischen Flüssigkeiten um Suspensionen, d. h. in einem Trägermedium suspendierte Festpartikel, die über das elektrische Feld polarisierbar sind. Durch die Verwendung elektrorheologischer Flüssigkeiten ist es möglich geworden, Aktoren ohne bewegte Teile auszuführen bzw. die Anzahl der bewegten Teile erheblich zu verringern.

Energiewandler von elektrorheologischen Flüssigkeitsaktoren besitzen Elektrodenanordnungen, zwischen denen sich die elektrorheologische Flüssigkeit befindet und an welche die elektrische Steuerspannung gelegt wird. Die Wechselwirkung zwischen der Elektrodenanordnung und der elektrorheologischen Flüssigkeit kann abhängig von der Art der Flüssigkeitsdeformation nach drei grundsätzlichen Moden unterschieden werden, dem Shearmode (Elektroden verschieben sich relativ zueinander in parallelen Ebenen), dem Flowmode (Elektroden sind fest angeordnet, die Flüssigkeit strömt zwischen den Elektroden hindurch) und dem Squeezemode (Elektroden verändern ihren Abstand zueinander). Diese Moden können auch in Kombination auftreten. Näheres hierzu ist in dem Buch "Technischer Einsatz neuer Aktoren", Expert-Verlag, Renningen-Malmsheim, 1995, Kapitel 3.2.1 und Bild 3.1.

Bei dem oben beschriebenen bekannten passiven Kraftelement auf Basis elektrorheologischer Flüssigkeiten ergibt sich ein Nachteil durch die indirekte Steuerung der Drosselöffnung über das Ventil auf Basis elektrorheologischer Flüssigkeiten. Die Regelung der Dämfpungscharakteristik ist bei diesem Kraftelement daher nur eingeschränkt möglich. Beim Stoßvorgang können unerwünschte Kraftspitzen auf den zu bremsenden Körper wirken. Weiterhin können Leckverluste des Kraftelementes nicht ausgeglichen werden.

Aus der DE 198 20 570 A1 ist ein Schwingungsdämpfer gemäß dem Oberbegriff des Anspruchs 1 bekannt, bei dem ein in einem Zylindergehäuse geführter Kolben mit Kolbenstange angeordnet ist und wobei der Kolben in dem Zylindergehäuse zwei volumenveränderliche Arbeitskammern bildet, die mit elektrorheologischer Flüssigkeit gefüllt sind. Es ist weiterhin mindestens ein die Arbeitskammern verbindender Strömungskanal sowie mindestens ein Bypasskanal vorgesehen, wobei mindestens ein Strömungskanal eine Ventilanordnung zur Steuerung der Durchflusscharakteristik aufweist.

Die FR 1 419 551 beschreibt einen konventionellen Hydraulikstoßdämpfer mit Flüssigkeitsventilen, bei dem eine Ankopplung des Kolbens und der Kolbenstange über eine Feder vorgesehen ist.

Mit ein Hauptentwicklungsziel der Automobilhersteller ist die Optimierung des Zusammenwirkens von Fahrzeuginsassen und Rückhaltesystemen. Die gesteigerte Komplexität dieser Systeme wie z. B. der Airbag-Systeme und adaptive Rückhaltesysteme erfordern den Einsatz von passiven Kraftelementen, bei welchen das Dämpfungsverhalten gezielt und reproduzierbar einstellbar ist. Weiterhin ist z. B. ein Hauptmerkmal die Reduzierung der maximalen Reaktionskräfte/Beschleunigungen auf den Fahrzeuginsassen.

Bei Kraftfahrzeuglenksäulen werden zur Begrenzung der Aufprallkraft eines Fahrzeuginsassen auf dem Lenkrad bzw. dem System Airbag/Lenkrad Kraftelemente eingesetzt. Derartige Kraftelemente absorbieren die kinetische Energie bei einem Stoß beispielsweise durch Verformung oder durch Zerstörung von aus Metall oder Kunststoff bestehenden Bauteilen (Rollblechanordnungen, Reißlasche). Diese Kraftelemente haben den Nachteil, daß sie nach einer Stoßeinwirkung nicht wieder verwendet werden können. Weiterhin besteht ein Nachteil darin, daß sie eine fest vorgegebene Dämpfungscharakteristik (Kraft-Weg-Kennlinie) aufweisen.

Weiterhin ist aus der EP 0 882 636 eine Lenksäule mit integriertem Kraftelement bekannt, welche aus einem äußeren und inneren Bauteil besteht. Bei Einwirkung einer Längskraft verschieben sich die Bauteile gegeneinander, wobei ein in dem äußeren Bauteil enthaltenes Dämpfungsmaterial sich verflüssigt, pulverisiert oder kristallisiert. Bei dieser bekannten Anordnung muß das Dämpfungsmaterial nach einer Stoßeinwirkung ausgetauscht werden, was mit erheblichem Aufwand verbunden ist. Desweiteren kann nur ein bestimmter Kraftverlauf über den Verschiebeweg hergestellt werden.

Aus der DE 197 49 970 A1 ist eine Insassen-Sicherheitsvorrichtung für die Fahrerseite eines Kraftfahrzeuges bekannt, bei der der Lenkspindel, die in einem Mantelrohr geführt ist, ein Energieabsorptionselement in Form einer Kolben-ZylinderAnordnung zugeordnet ist. Im Crashfall sorgt die Kolben-Zylinder-Anordnung der Lenksäule für den Energieabbau eines auf das Lenkrad aufprallenden Insassen. Zur Anpassung des Dämpfungsverhaltens an die Unfallschwere werden in Abhängigkeit von der Masse und der Relativgeschwindigkeit des Insassen eine unterschiedliche Anzahl von Ventilen angesteuert.

Aufgabe der vorliegenden Erfindung ist es, ein Kraftelement derart weiterzubilden, daß eine geregelte Dämfungscharakteristik eingestellt werden kann und Kraftspitzen vermieden werden.

Diese Aufgabe wird durch die Merkmale gemäß dem kennzeichnenden Teil von Anspruch 1 gelöst. Im ersten Moment des Stoßes wird eine günstige Masse-Feder-Kopplung erreicht und damit werden Kraftspitzen zu Beginn des Stoßes vermieden. Im weiteren Verlauf des Stoßes, das heißt nach Ankopplung des Kolbens wird der Kolben bewegt und die elektrorheologische Flüssigkeit wird von der einen Arbeitskammer in die andere Arbeitskammer verdrängt. Da die die Arbeitskammern verbindende Fluidverbindung ein elektrorheologisches Flüssigkeitsventil umfaßt, kann das Dämpfungsverhalten über die Höhe des elektrischen Feldes eingestellt werden. Bei der Verwendung des Kraftelementes in bzw. an der Lenksäule von Kraftfahrzeugen kann in Abhängigkeit von mittels Sensoren gemessener Insassenparameter wie beispielsweise der Sitzposition, der Größe des Insassen, des Gewichtes des Insassen, der Gurtbenutzung (ja oder nein) und/oder der Unfallschwere eine optimale Dämpfungscharakteristik eingestellt werden.

Bei neueren Erkenntnissen der Biomechanik oder bei Gesetzesänderungen kann das in Kraftfahrzeugen bereits eingesetzte Kraftelement durch einfache Anpassung der Ansteuerung weiterhin angewendet werden.

Durch die Ausbildung eines Gasvolumens in einem zweigeteilten Kolben, der aus einem in einem hohlzylindrischen Unterteil gleitend geführten Deckelteil besteht und wobei in dem Deckelteil des Kolbens die Kolbenstange gleitend gelagert ist, wird zu Beginn des Stoßes nur die geringe Masse der Kolbenstange beschleunigt. Die Federsteifigkeit des Gasvolumens ist anfangs sehr gering und ändert sich im weiteren Verlauf progressiv. Da der Druck dieses Gasvolumens einstellbar ist, können die Koppelbedingungen zwischen Kolbenstange und Kolben undsomit die Dämpfungscharakteristik an das jeweilige Kraftfahrzeug angepaßt werden.

In einer weiteren Ausgestaltung ist vorgesehen, daß die die Arbeitskammern verbindende Fluidverbindung durch zwei konzentrisch angeordnete, das Zylindergehäuse bildende Hülsen ausgebildet ist, und der zwischen den Hülsen gebildete Ringspalt mit ansteuerbaren Elektrodenflächen zur Erzeugung eines elektrischen Feldes versehen ist. Durch diese Ausbildung ist eine direkte Regelung der Dämpfungscharakteristik zu jedem Zeitpunkt des Stoßvorganges möglich.

Die Erfindung wird nachfolgend anhand eines Ausführungsbeispiels, das in der Figur 1 dargestellt ist, näher erläutert. Es zeigt:
- Fig. 1:: einen Längsschnitt durch ein passives Kraftelement in einer Grundstellung;

In Fig. 1 ist ein erfindungsgemäßes passives Kraftelement 1 auf Basis elektrorheologischer Flüssigkeiten dargestellt. Das Kraftelement 1 besteht aus einer ersten zylindrischen Hülse 2, die von einer zweiten zylindrischen Hülse 3 umgeben ist. Die Hülse 3 ist konzentrisch zu der Hülse 2 angeordnet. Zwischen der inneren Mantelfläche 4, der Hülse 3 und der äußeren Mantelfläche 5 der Hülse 2 verbleibt dabei ein Ringspalt 6, der sich über die gesamte axiale Baulänge der Hülsen 2, 3 erstreckt. Die Hülsen 2 und 3 sind jeweils endseitig mit einem Bodenteil 7 bzw. einem Deckelteil 8 flüssigkeitsdicht verschlossen. Das Bodenteil 7 sowie das Deckelteil 8 sind aus einem Isolationswerkstoff hergestellt. Bodenteil 7 sowie Deckelteil 8 könnten auch aus Stahl hergestellt und mit einer Isolationsschicht versehen sein. In die erste Hülse 2 sind jeweils endseitig radiale über den Umfang verteilt angeordnete Durchgangsbohrungen 9, 9' eingebracht. Desweiteren sind axial beabstandet weitere über den Umfang verteilt angeordnete Durchgangsbohrungen 10 eingebracht. Die endseitig eingebrachten Durchgangsbohrungen 9 weisen einen wesentlich größeren Durchmesser auf als die weiteren axial beabstandet angeordneten Durchgangsbohrungen 10. Die Durchgangsbohrungen 10 könnten auch über den Kolbenhub unterschiedliche Durchmesser aufweisen. Vorteilhafterweise werden die Durchgangsbohrungen 10 derart ausgebildet, daß die Durchmesser von oben nach unten kleiner werden.

Die erste Hülse 2 wird über einen in der ersten Hülse gleitend gelagerten Kolben 11 in zwei volumenveränderliche Arbeitskammern A, B unterteilt. Der Kolben 11 ist zweiteilig ausgeführt und besteht aus einem Deckelteil 12 und einem hohlzylindrischen Unterteil 13, das einseitig mit einem Bodenteil 14 verschlossen ist. Das Unterteil 13 ist ebenfalls aus einem Isolationswerkstoff hergestellt bzw. ist mit einer Isolationsschicht versehen. Zwischen Deckelteil 12 und Unterteil 13 wird somit eine weitere Volumenveränderliche Arbeitskammer C gebildet. Hierfür ist das Deckelteil 12 gleitend in dem Unterteil 13 geführt und besteht im wesentlichen aus einem scheibenförmigen Abschnitt 15 mit zylindrischem Ansatz 16. Um ein Herausgleiten des Deckelteils 12 aus dem Unterteil 13 zu verhindern, ist an dem Unterteil 13 an seinem nach oben ragenden Endbereich ein Anschlag in Form eines Sprengrings 17 angeordnet. In dem Deckelteil 12 ist mittig eine Durchgangsbohrung eingebracht, in der eine Kolbenstange 18 gleitend gelagert ist. Die Kolbenstange 18 ist weiterhin aus dem Deckelteil 8 abgedichtet nach außen geführt. Die Kolbenstange 18 ist mit einer Durchgangsbohrung 19 versehen. Über die Durchgangsbohrung 19 wird die Arbeitskammer C mit einem Gas befüllt, wobei der Gasdruck der zu erwartenden Crashcharakteristik angepaßt werden kann.

Arbeitskammer A und Arbeitskammer B stehen über die Durchgangsbohrungen 9, 9', 10 sowie den Ringspalt 6 miteinander in Verbindung. In den Arbeitskammern A, B sowie dem Ringspalt 6 ist eine elektrorheologische Flüssigkeit eingebracht. Zwischen Hülse 2 und Hülse 3 wird ein Ringspaltventil V auf Basis elektrorheologischer Flüssigkeiten gebildet, wobei die Elektrodenflächen einerseits durch die innere Mantelfläche 4 der Hülse 3 und andererseits durch die äußere Mantelfläche 5 der Hülse 2 gebildet werden. Die Hülse 2 ist vorzugsweise über eine aus dem Deckelteil 8 geführte elektrische Leitung mit einer steuerbaren Hochspannungsversorgung verbunden. Die Hülse 3, Dekkelteil 8, Kolbenstange 18 sind geerdet. Aufgrund des oben beschriebenen Aufbaus steht die Kammer A über das Ringspaltventil V mit der Arbeitskammer B in Verbindung. Die Viskosität der elektrorheologische Flüssigkeit kann im Ringspalt 6 über ein elektrisches Hochspannungssignal gesteuert werden. Hierdurch kann der Druckunterschied zwischen den beiden Zylinderkammern A und B und somit die Dämpfungscharakteristik des Kraftelementes über die Höhe des elektrischen Feldes eingestellt werden.

Die in Fig. 1 gezeigte Stellung des Kolbens 11 mit Kolbenstange 18 in der Hülse 2 zeigt eine Grundeinstellung des Kraftelementes 1, bei der keine Krafteinleitung über ein nicht dargestelltes Krafteinleitunaselement, in die Kolbenstange 18 erfolgt. Bei dieser Grundeinstellung fährt die Kolbenstange 18 bis zu einem mechanischen Anschlag 20 aus der Arbeitskammer C des Kolbens 11 heraus. Da die Arbeitskammer C mit Gas gefüllt ist, wird die in der Arbeitskammer A, B befindliche elektrorheologische Flüssigkeit über die beiden gegeneinander beweglich gelagerten Kolbenteile: Deckelteil 12, Unterteil 13 ebenfalls mit einem Druck beaufschlagt. Da die den Arbeitskammern A bzw. B zugewandten wirksamen Kolbenflächen des Unterteils 13 bzw. des Deckelteils 12 unterschiedlich groß sind, fährt der Kolben 11 bis zum Anschlag, der durch die Stirnseite des zylindrischen Ansatzes 16 gebildet wird, an das Deckelteil 8.

Das Kraftelement 1 ist über die Hülse 3 an einem ortsfesten Bauteil befestigt. Relativ zu diesem Bauteil bewegt sich nun ein Körper, dessen Bewegungsenergie definiert vernichtet werden soll. Über ein nicht dargestelltes Krafteinleitungselement wird der Stoß auf die Kolbenstange, die gleitend in dem Dekkelteil 8 und dem Deckelteil 12 geführt ist, und in die mit Gas gefüllte Arbeitskammer C des Kolbens 11 eindringt, übertragen. Das elastische Element wird hierbei durch das Gasvolumen gebildet. Zu Beginn des Stoßes wird die geringe Masse der Kolbenstange 18 beschleunigt. Die Federsteifigkeit des Gasvolumens in der Arbeitskammer C ist anfangs sehr gering und ändert sich im weiteren Verlauf progressiv. Im weiteren Verlauf des Stoßes bewegt sich die Kolbenstange 18 in vertikaler Richtung nach unten, wodurch das Gasvolumen der Arbeitskammer C komprimiert wird. Hierdurch erhöht sich der Innendruck in der Arbeitskammer C und eine Gegenkraft gegen die Stoßkraft wird erzeugt. Während die Kolbenstange 18 in die Arbeitskammer C einfährt, das heißt maximal sobald die Kolbenstange 18 auf das Bodenteil 14 auftrifft, bewegt sich der Kolben 11 in vertikaler Richtung nach unten, wobei die elektrorheologische Flüssigkeit in der Arbeitskammer A beschleunigt wird. Bei der Bewegung des Kolbens 11 nach unten kann die elektrorheologische Flüssigkeit teilweise durch die Durchgangsbohrungen 10 in den Ringspalt 6 gedrückt werden, ein Hauptteil der elektrorheologischen Flüssigkeit wird jedoch durch die Durchgangsbohrungen 9 in den Ringspalt 6 gedrückt und strömt durch die gesamte Länge des Ringspaltes in die Arbeitskammer B. Ein Volumenausgleich der in die Arbeitskammer B bei Bewegung des Kolbens 11 einfahrenden Kolbenstange wird durch das bewegliche Deckelteil 12 erreicht, das bei der Bewegung des Kolbens 11 nach unten in das Unterteil 13 des Kolbens 11 einfährt. Desweiteren ist eine nicht dargestellte Steueranordnung vorgesehen, die mit der Hochspannungsquelle in Verbindung steht. Durch entsprechende Ansteuerung des Ringspaltventils, das heißt durch Veränderung des elektrischen Feldes im Ringspalt 6 kann eine gewünschte Dämpfungscharakteristik eingestellt werden.

Anstelle der Verwendung von einer elektrorheologischen Flüssigkeit als Druckmittel kann auch eine magnetorheologische Flüssigkeit eingesetzt werden. Bei der Verwendung von magnetorheologischen Flüssigkeiten werden anstelle der Elektrodenflächen elektrisch ansteuerbare Spulenanordnungen vorgesehen.

Das anhand der Fig. 1 beschriebene Kraftelement kann beispielsweise in bzw. an der Lenksäule eines Kraftfahrzeuges eingesetzt werden- Dabei bildet das System Airbag/Lenkrad das bereits beschriebene Krafteinleitungselement und die äußere Hülse 3 wird durch ein Hauptbestandteil der Lenksäule gebildet. Das erfindungsgemäße Kraftelement könnte auch außen an einer bestehenden Lenksäule adaptiert werden. Hierbei könnte es auch vorteilhaft sein, zwei oder drei Kraftelemente an einer Lenksäule zu adaptieren. Bei der Verwendung des Kraftelementes in bzw. an der Lenksäule kann in Abhängigkeit von dem Insassen, das heißt der Sitzposition, der Größe des Insassen, des Gewichtes des Insassen, der Gurtbenutzung (ja oder nein) und/oder der Unfallschwere eine optimale Dämpfungscharakteristik, das heißt Kraft-Weg-Kennlinie eingestellt werden. Hierzu müssen entsprechende Sensoren vorgesehen sein, wobei die Sensorsignale an die Steueranordnung weitergeleitet werden. Die Dämpfungscharakteristik kann auch während des Crashs, das heißt während des Stoßvorganges hinsichtlich Kraftniveau und Verlauf beeinflußt werden. Das erfindungsgemäße Kraftelement kann weiterhin im Knieschutz bei Kraftfahrzeugen eingesetzt werden. Bei dieser Anwendung wird das Krafteinleitungselement als eine der Kraftfahrzeuginnenraumverkleidung zugeordneten Auftreffplatte ausgebildet. Weiterhin kann das Kraftelement zwischen Fahrzeugstruktur und Stoßfänger angeordnet werden um bei kleineren Kollisionen die Aufprallenergie zu vernichten.

## Patentansprüche

1. Passives Kraftelement auf Basis elektrorheologischer Flüssigkeiten, bei dem ein in einem. Zylindergehäuse geführter Kolben (11, 12, 13, 14) mit Kolbenstange (18) angeordnet ist, wobei die Krafteinleitung über ein Krafteinleitungselement erfolgt und die Kolbenstange (18) mit dem Krafteinleitungselement in Verbindung steht und wobei der Kolben in dem Zylindergehäuse zwei volumenveränderliche Arbeitskammern (A, B) bildet, die mit elektrorheologischen Flüssigkeiten gefüllt sind, und die über eine Fluidverbindung in Verbindung stehen, und wobei die Fluidverbindung eine Ventilanordnung (V) zur Steuerung der Durchflußcharakteristik aufweist, die ein elektrorheologisches Flüssigkeitsventil umfasst, und wobei bei Bewegung des Kolbens im Zylindergehäuse die elektrorheologische Flüssigkeit über die Ventilanordnung (V) verdrängt wird, **dadurch gekennzeichnet, dass** bei Krafteinleitung zur Vermeidung von Kraftspitzen zunächst der Kolben (11, 12, 13, 14) über ein elastisches Element an das Krafteinleitungselement angekoppelt wird, wobei das elastische Element hinsichtlich der Dämpfungscharakteristik einstellbar ist und wobei anschließend der Kolben (11,12,13,14) im Zylindergehäuse (2,3) bewegt wird.

2. Passives Kraftelement nach Patentanspruch 1, wobei das elastische Element durch ein von dem Krafteinleitungselement beaufschlagbaren Gasvolumen gebildet wird.

3. Passives Kraftelement nach Patentanspruch 1, wobei das Gasvolumen in dem Kolben (11, 12, 13, 14) angeordnet ist und der Kolben mindestens eine beweglich gelagerte Begrenzungswand (12) aufweist.

4. Passives Kraftelement nach Patentanspruch 3, wobei der Kolben zweigeteilt ausgeführt ist und aus einem in einem hohlzylindrischen Unterteil (13) gleitend geführten Deckelteil (12) besteht und wobei zwischen Deckelteil und Unterteil eine volumenveränderliche Arbeitskammer C gebildet wird und wobei in dem Deckelteil (12) des Kolbens (11) die Kolbenstange (18) gleitend gelagert ist.

5. Passives Kraftelement nach Patentanspruch 4, wobei die Kolbenstange (18) mit einer Durchgangsbohrung (19) versehen ist und die Arbeitskammer (C) über die Durchgangsbohrung (19) mit einem Gasdruckspeicher in Verbindung steht.

6. Passives Kraftelement nach einem der vorhergehenden Ansprüche, wobei die die Arbeitskammern A und B verbindende Fluidverbindung durch zwei konzentrisch angeordnete, das Zylindergehäuse bildende Hülsen (2, 3) ausgebildet ist, und der zwischen den Hülsen gebildete Ringspalt (6) mit ansteuerbaren Elektrodenflächen zur Erzeugung eines elektrischen Feldes versehen ist.

7. Passives Kraftelement nach einem der vorhergehenden Ansprüche, wobei die innere Hülse (2) endseitig mit Durchgangsbohrungen (9, 9') und weiterhin mit axial beabstandet angeordneten Durchgangsbohrungen (10) versehen ist.

8. Verwendung des passiven Kraftelements nach zumindest einem der vorhergehenden Ansprüche in und/oder an der Lenksäule eines Kraftfahrzeuges.

9. Verwendung des passiven Kraftelements nach zumindest einem der vorhergehenden Ansprüche im Knieschutz bei Kraftfahrzeugen.

10. Verwendung des passiven Kraftelements nach zumindest einem der vorhergehenden Ansprüche zwischen Fahrzeugstruktur und Stoßfänger bei Kraftfahrzeugen.

## Claims

1. Passive force element based on electrorheological fluids, in which there is arranged, guided in a cylinder housing, a piston (11, 12, 13, 14) with a piston rod (18), wherein the introduction of force is effected by means of a force introduction element and the piston rod (18) is connected to the force introduction element, and wherein in the cylinder housing the piston forms two variable-volume working chambers (A, B), which are filled with electrorheological fluids and which are connected by means of a fluid connection, and wherein the fluid connection has a valve arrangement (V) for control of the flow characteristic, which comprises an electrorheological fluid valve, and wherein, upon movement of the piston in the cylinder housing, the electrorheological fluid is displaced via the valve arrangement (V), **characterised in that**, upon the introduction of force, the piston (11, 12, 13, 14) is firstly coupled to the force application element by means of an elastic element to prevent force peaks, wherein the elastic element is adjustable with respect to the damping characteristic, and wherein the piston (11, 12, 13, 14) is then moved in the cylinder housing (2, 3).

2. Passive force element according to claim 1, wherein the elastic element is formed by a volume of gas, which can be acted upon by the force introduction element.

3. Passive force element according to claim 1, wherein the volume of gas is arranged in the piston (11, 12, 13, 14) and the piston has at least one movably mounted boundary wall (12).

4. Passive force element according to claim 3, wherein the piston is configured in two parts and comprises a cover part (12) guided to slide in a hollow cylindrical lower part (13), and wherein a variable-volume working chamber C is formed between the cover part and the lower part, and wherein the piston rod (18) is mounted to slide in the cover part (12) of the piston (11).

5. Passive force element according to claim 4, wherein the piston rod (18) is provided with a through passage (19) and the working chamber (C) is connected to a gas pressure storage means via the through passage (19).

6. Passive force element according to one of the preceding claims, wherein the fluid connection connecting the working chambers A and B is formed by two concentrically arranged sleevees (2, 3) forming the cylinder housing, and the ring gap (6) formed between the sleevees is provided with controllable electrode surfaces for the generation of an electric field.

7. Passive force element according to one of the preceding claims, wherein the inner sleeve (2) is provided at the ends with through passages (9, 9') and additionally with axially spaced through passages (10).

8. Use of the passive force element according to at least one of the preceding claims in and/or on the steering column of a motor vehicle.

9. Use of the passive force element according to at least one of the preceding claims in the knee protection arrangement in motor vehicles.

10. Use of the passive force element according to at least one of the preceding claims between the vehicle structure and bumper in motor vehicles.

## Revendications

1. Elément de force passif à base de liquides électro-rhéologiques, dans lequel est disposé un piston (11, 12, 13, 14) guidé dans un boîtier de cylindre avec tige de piston (18), l'application de force s'effectuant au moyen d'un élément d'application de force et la tige de piston (18) étant en liaison avec l'élément d'application de force et le piston formant dans le boîtier de cylindre deux chambres de travail (A, B) variables en volume, qui sont remplies avec des liquides électro-rhéologiques et qui sont en liaison par une liaison fluidique, et la liaison fluidique présentant un agencement de vanne (V) pour la commande de la caractéristique de débit, qui comprend une vanne de liquide électro-rhéologique, et le liquide électro-rhéologique étant refoulé par l'agencement de vanne (V) lors du déplacement du piston dans le boîtier de cylindre, **caractérisé en ce que**, en cas d'application de force, et afin d'éviter des pics de force, le piston (11, 12, 13, 14) est rattaché d'abord au moyen d'un élément élastique à l'élément d'application de force, l'élément élastique pouvant être réglé en ce qui concerne la caractéristique d'amortissement et le piston (11, 12, 13, 14) étant déplacé ensuite dans le boîtier de cylindre (2, 3).

2. Elément de force passif selon la revendication 1, l'élément élastique étant formé par un volume de gaz pouvant être alimenté par l'élément d'application de force.

3. Elément de force passif selon la revendication 1, le volume de gaz étant disposé dans le piston (11, 12, 13, 14) et le piston présentant au moins une paroi de délimitation (12) logée de façon mobile.

4. Elément de force passif selon la revendication 3, le piston étant réalisé en deux parties et étant constitué d'une partie de couvercle (12) guidée de façon glissante dans une partie inférieure (13) cylindrique creuse et une chambre de travail C variable en volume étant formée entre la partie de couvercle et la partie inférieure et la tige de piston (18) étant logée de façon glissante dans la partie de couvercle (12) du piston (11).

5. Elément de force passif selon la revendication 4, la tige de piston (18) dotée d'un perçage de passage (19) et la chambre de travail (C) étant en liaison par le perçage de passage (19) avec un accumulateur de pression de gaz.

6. Elément de force passif selon l'une quelconque des revendications précédentes, la liaison fluidique reliant les chambres de travail A et B étant formée par deux douilles (2, 3) disposées de façon concentrique et formant le boîtier de cylindre et la fente annulaire (6) formée entre les douilles étant dotée de surfaces d'électrodes activables pour générer un champ électrique.

7. Elément de force passif selon l'une quelconque des revendications précédentes, la douille (2) intérieure étant dotée côté extrémité de perçages de passage (9, 9') et également de perçages de passage (10) disposés axialement et de façon espacée.

8. Utilisation de l'élément de force passif selon au moins l'une quelconque des revendications précédentes dans et/ou sur la colonne de direction d'un véhicule.

9. Utilisation de l'élément de force passif selon au moins l'une quelconque des revendications précédentes dans la protection du genou sur les véhicules.

10. Utilisation de l'élément de force passif selon au moins l'une quelconque des revendications précédentes entre la structure de véhicule et le pare-chocs sur les véhicules.
